# FASCICULE DE BREVET EUROPEEN

(11) **EP 3 504 862 B1**
(45) Date de publication et mention de la délivrance du brevet: **27.03.2024**
(21) Numéro de dépôt: 17758227.7
(22) Date de dépôt: 25.07.2017
(51) Int. Cl.: H04L 67/12, H04L 69/14, G06F 3/14

(54) **PROCÉDÉ ET DISPOSITIF POUR L'AFFICHAGE DE DONNÉES DE NAVIGATION SUR UN COMBINÉ D'INSTRUMENTS NUMÉRIQUE D'UN VÉHICULE**
VERFAHREN UND VORRICHTUNG ZUR ANZEIGE VON NAVIGATIONSDATEN AUF EINEM DIGITALEN ARMATURENBRETT EINES FAHRZEUGS
METHOD AND DEVICE FOR DISPLAYING NAVIGATION DATA ON A DIGITAL INSTRUMENT PANEL OF A VEHICLE

(30) Priorité: 25.08.2016 FR 1657927
(43) Date de publication de la demande: 03.07.2019
(73) Titulaire: Stellantis Auto SAS, 78300 Poissy (FR)
(72) Inventeur: THAI, Huu Kim, 75013 Paris (FR); CORLAY, Tanguy, 91380 Chilly Mazarin (FR)
(74) Mandataire: Jeannin, Laurent Jean-Pierre
(86) Numéro de dépôt international: PCT/FR2017/052060
(87) Numéro de publication internationale: WO 2018/037178

(56) Documents cités:
- EP-A1- 2 739 011
- EP-A2- 1 698 518
- EP-A2- 2 355 467
- EP-A2- 2 355 467
- EP-A2- 2 960 097
- EP-A2- 2 960 097
- US-A1- 2014 100 740
- US-A1- 2014 100 740

## Description

L'invention concerne l'affichage de données dans les véhicules et plus particulièrement l'affichage de données de navigation.

On connait par le document EP2960097 un combiné d'instruments proposant plusieurs modes d'affichage. Un tel combiné permet d'ajuster l'affichage des données de navigation en fonction des préférences du conducteur. Cependant, un tel combiné nécessite des ressources en calcul particulièrement importantes, ce qui implique un coût élevé.

L'invention a donc pour but de remédier au problème précité et de proposer un procédé et un dispositif pour l'affichage de données de navigation sur un combiné d'instruments numériques comportant de faibles ressources de calcul.

Elle propose plus précisément à cet effet un procédé pour l'affichage de données de navigation sur un combiné d'instruments numérique, d'un véhicule, selon la revendication 1.

En utilisant l'invention, on peut personnaliser l'affichage des données de navigation sur un combiné d'instrument comportant de faibles ressources de calcul, en particulier, sur un combiné qui n'est pas adapté pour déterminer des images de cartographies en trois dimensions.

En utilisant le procédé selon l'invention, l'utilisateur peut sélectionner un mode d'affichage comportant une cartographie en trois dimensions (et donc très consommateurs en ressources de calcul). Le calcul de la cartographie est alors exécuté sur un calculateur multimédia, relié au combiné par l'intermédiaire d'une liaison vidéo.

Avantageusement, le combiné comprend au moins un des modes d'affichage des données de navigation suivants :
- Un premier mode d'affichage comprenant une première zone d'affichage représentant une carte et une deuxième zone d'affichage comprenant des instructions de navigations, affichées de façon permanente ;
- Un deuxième mode d'affichage comprenant une première zone d'affichage comprenant une représentation cartographique simplifiée et une instruction de navigation, affichées de façon permanente ;
- Un troisième mode d'affichage comprenant une première zone d'affichage comportant une instruction de navigation affichée de façon ponctuelle.

Avantageusement, l'unité de traitement émet, à destination du calculateur, le message indiquant le mode d'affichage sélectionné, par l'intermédiaire d'un bus de données.

Avantageusement, l'unité de traitement reçoit, des données vidéo, provenant du calculateur, par l'intermédiaire d'une liaison vidéo.

Avantageusement, le véhicule comportant en outre un deuxième écran, ledit procédé comporte en outre une étape de détermination d'un premier flux vidéo, correspondant au mode d'affichage sélectionné pour le premier écran, d'une part, et d'un deuxième flux vidéo destiné au deuxième écran.

Avantageusement, le procédé pour l'affichage de données de navigation selon l'invention comporte en outre une étape de détermination de données graphiques liées à un affichage de données liées au fonctionnement du véhicule, lesdites données étant affichées simultanément au flux vidéo sur le premier écran.

Avantageusement, l'unité de traitement génère une page écran comportant des données liées au fonctionnement du véhicule et une zone d'incrustation, le flux vidéo étant incrustée dans ladite zone d'incrustation.

Les données vidéo reçues par l'unité de traitement comportant des métadonnées indiquant le mode d'affichage associé audites données vidéo, le procédé comporte en outre une étape de décodage des et en ce que l'unité de traitement commande ensuite l'affichage des données vidéo reçues selon le mode d'affichage indiqué dans les métadonnées.

L'invention concerne aussi un dispositif pour l'affichage de données de navigation sur un combiné d'instruments numérique, d'un véhicule, selon la revendication 8.

L'invention concerne aussi un véhicule caractérisé en ce qu'il comporte un dispositif pour l'affichage de données de navigation selon l'invention.

D'autres caractéristiques et avantages de l'invention apparaîtront à l'examen de la description détaillée ci-après, et des dessins annexés, sur lesquels:
- la figure 1 illustre un exemple de dispositif selon l'invention ;

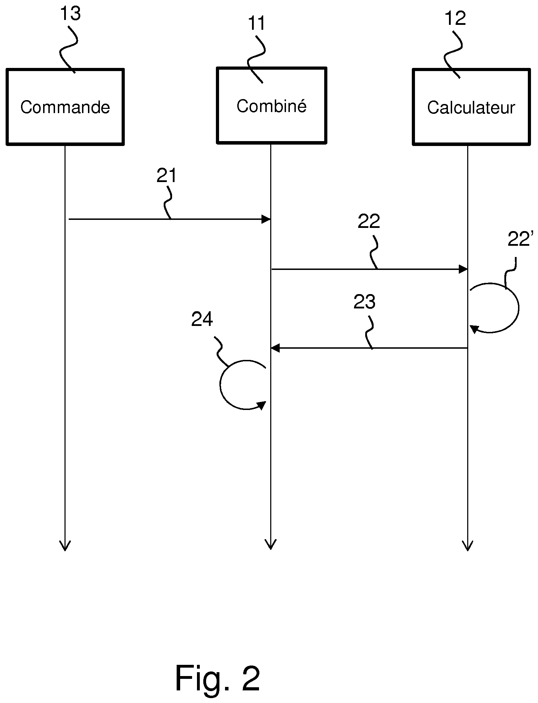

- la figure 2 illustre un logigramme représentant le procédé selon l'invention ;
- les figures 3a et 3b illustrent des modes d'affichages selon l'invention.

Les dessins annexés pourront non seulement servir à compléter l'invention, mais aussi contribuer à sa définition, le cas échéant.

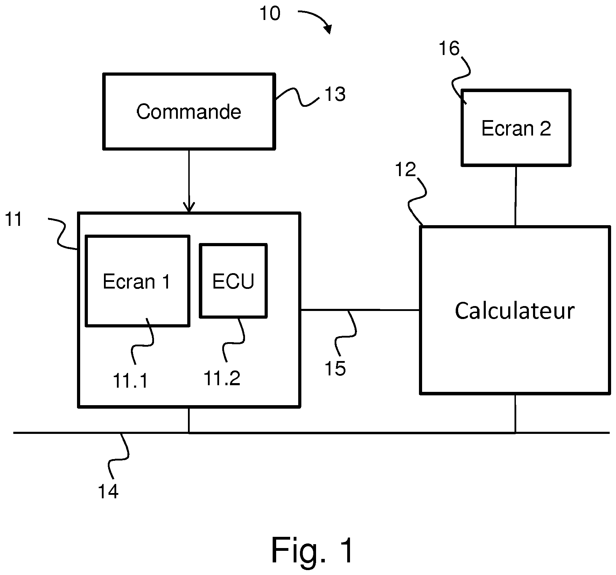

En référence à la figure 1, un dispositif 10 d'affichage de données de navigation selon l'invention comporte un combiné d'instruments 11 numérique, un calculateur 12 et au moins un organe de commande 13.

Le combiné d'instruments 11 numérique et le calculateur 12 communique par l'intermédiaire d'un bus de données 14 par exemple un bus CAN (acronyme de l'expression anglo-saxonne Controller Area Network).

Le calculateur 12 est en outre adapté pour envoyer des données vidéo au combiné d'instruments 11 numérique, au travers d'une liaison vidéo 15 par exemple de type LVDS (acronyme de l'expression anglo-saxonne Low Voltage Differential Signaling).

Le calculateur 12 fait par exemple partie d'un organe d'info-divertissement qui exécute un logiciel de navigation. L'organe d'info-divertissement comprend par exemple un écran tactile et des commandes physiques qui permettent à l'utilisateur d'interagir avec ledit organe d'info-divertissement.

Le calculateur 12 comprend au moins un processeur et une mémoire.

Le véhicule comprend au moins un organe de commande 13 permettant au conducteur de sélectionner un mode d'affichage du combiné numérique. L'organe de commande est, par exemple, un organe de commutation disposé à proximité du volant du véhicule et prenant la forme d'un levier ou d'une palette pivotante (commande connue sous l'appellation commodo - marque déposée). Mais l'invention n'est pas limitée à ce mode de réalisation. L'organe de commande 13 peut aussi être un écran tactile.

L'invention concerne un procédé pour l'affichage de données de navigation sur le combiné 11 d'instruments numérique, Le procédé comporte des étapes suivantes.

L'unité de traitement 11.2 reçoit une commande d'affichage d'un des au moins deux modes d'affichage de navigation. La commande provient de l'organe de commande 13.

En réponse à la réception de cette commande, l'unité de traitement 11.2, émet à destination du calculateur 12, un message indiquant le mode d'affichage sélectionné. Ce message est transmis par l'intermédiaire du bus de données 14.

Le combiné 11 comprend au moins deux modes d'affichages différents pour les données de navigation. Il comprend par exemple au moins l'un des modes décrit ci-dessous.

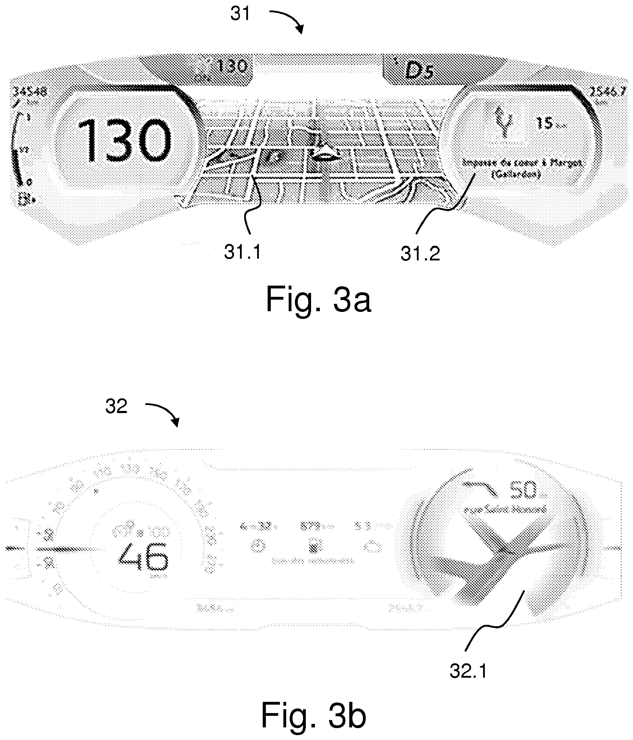

Un premier mode d'affichage 31, illustrée figure 3a, comprend une première zone d'affichage 31.1 représentant une carte et une deuxième zone d'affichage 31.2 comprenant des instructions de navigation, affichées de façon permanente.

Un deuxième mode d'affichage (non représenté) comprend une première zone d'affichage comprenant une représentation cartographique simplifiée et une instruction de navigation, affichées de façon permanente.

Un troisième mode d'affichage 32, illustrée figure 3b, comprend une première zone d'affichage 32.1 comportant une instruction de navigation affichée de façon ponctuelle. Cette zone d'affichage apparaît ponctuelle lorsqu'une instruction de navigation doit être indiquée au conducteur. Ensuite elle disparait de l'écran 11.1 du combiné.

Selon l'invention, le calculateur 12 est en charge de la détermination d'un flux vidéo correspondant à des données de navigation destinées à être affiché sur l'écran 11.1 du combiné 11. Cette caractéristique est particulièrement utile lorsque l'unité de traitement 11.2 du combiné dispose d'une puissance de calcul limitée, par exemple insuffisante pour générer des cartographies en trois dimensions.

A la réception message, le calculateur 12 détermine un flux vidéo et correspondant au mode d'affichage sélectionné. Par exemple si le premier mode d'affichage est sélectionné, le calculateur 12 détermine un flux vidéo comportant une carte et des instructions de navigations.

L'unité de traitement 11.2 réceptionne 23 les données vidéo, par l'intermédiaire de la liaison vidéo 15.

L'unité de traitement 11.2 commande ensuite l'affichage 24 des données vidéo reçues dans au moins une zone d'affichage du premier écran 11.1.

En pratique, l'unité de traitement 11.2 génère une page écran comportant des données liées au fonctionnement du véhicule (par exemple la vitesse du véhicule) et une zone d'incrustation. Le flux vidéo est incrustée dans ladite zone d'incrustation.

Les données graphiques liées à l'affichage de données liées au fonctionnement du véhicule, sont déterminées par l'unité de traitement 11.2 et sont affichées simultanément au flux vidéo sur le premier écran 11.1.

Selon un mode de réalisation avantageux, le flux vidéo reçu par l'unité de traitement 11.2 comporte des métadonnées indiquant le mode d'affichage associé audit flux vidéo. Les métadonnées sont par exemple codées sur un pixel des images du flux vidéo. Dans ce cas, la couleur du pixel concerné indique le mode d'affichage. Autrement dit, un pixel dans l'image de la carte (par exemple dans un coin de l'image) est dédié au codage des métadonnées.

Le procédé selon l'invention comporte alors une étape de décodage des métadonnées contenues dans le pixel des images du flux vidéo. L'unité de traitement 11.2 commande ensuite l'affichage 24 des données vidéo reçues selon le mode d'affichage indiqué dans les métadonnées.

Cette caractéristique permet d'éviter une incohérence entre le mode d'affichage du combiné 11 et le flux vidéo reçu.

Il est à noter qu'il existe un temps de latence entre l'étape d'émission à destination du calculateur 12, du message indiquant le mode d'affichage sélectionné et l'étape de réception 23 des données vidéo, par l'intermédiaire de la liaison vidéo 15. La caractéristique précitée permet d'afficher le mode d'affichage sélectionné lorsque l'unité de traitement 11.2 reçoit un flux vidéo conforme au mode d'affichage demandé. Autrement dit, le changement du mode d'affichage est commandé par les métadonnées reçues.

Selon un mode de réalisation avantageux, le véhicule comporte en outre un deuxième écran 16. Le deuxième écran 16 peut aussi être utilisé pour afficher des données de navigation.

Selon ce mode de réalisation, le procédé comporte une étape de détermination par le calculateur d'un premier flux vidéo, correspondant au mode d'affichage sélectionné pour le premier écran 11.1, d'une part, et d'un deuxième flux vidéo destiné au deuxième écran 16.

L'invention permet à un conducteur, au travers d'un écran tactile ou de commandes physiques, de choisir un mode d'affichage d'un écran de combiné.

Le conducteur configure par exemple via l'écran principal, le mode fenêtré afin de définir les fonctions à afficher sur l'écran du combiné.

Il choisit le mode plein écran ou fenêtré. L'écran du combiné sait ainsi quelle surface d'affichage est dédiée à la fonction de navigation.

Les informations de navigation sont présentes et gérées par exemple par un module d'info-divertissement, et en particulier par le logiciel de navigation.

Sur réception de la commande générée par le conducteur, l'écran du combiné réserve les surfaces d'affichage dédiées à la fonction choisie par le conducteur, et envoie une commande au logiciel de navigation par le réseau habitacle.

Le logiciel de navigation interprète la valeur de cette commande. Si la commande égale :
- "no vidéo", le logiciel de navigation ne produit aucune vidéo vers l'écran du combiné ;
- "full screen", le logiciel de navigation produit en permanence une cartographie par exemple au format 2/3 de l'écran du combiné. L'écran du combiné affiche en permanence la vidéo de navigation sur 2/3 de sa surface.
- "fenêtré", le logiciel de navigation produit en permanence une cartographie au format 1/3 de l'écran du combiné. L'écran du combiné affiche en permanence la vidéo de navigation sur 1/3 de sa surface.
- "pop-up", le logiciel de navigation produit en permanence une cartographie au format 1/3 de l'écran secondaire. Cependant, l'écran secondaire, qui pilote son affichage, n'affiche la cartographie sur 1/3 de sa surface que lorsqu'une consigne de guidage est exportée par le logiciel de navigation sur le réseau habitacle. Sinon, cette surface est dédiée à une autre fonction que la navigation, comme configuré par le conducteur.

Le module d'info-divertissement avertit l'écran secondaire du format vidéo envoyé dans un flux de métadonnées sur un pixel de l'image vidéo exportée.

Sur réception des métadonnées, l'écran secondaire sait qu'il reçoit les informations vidéo de navigation au format demandé, et affiche les données de navigation (cartographie, route à suivre, consigne de guidage, ...) sur la zone de l'écran secondaire dédiée en fonction du mode (plein écran, fenêtré, popup).

## Revendications

1. Procédé pour l'affichage de données de navigation sur un combiné (11) d'instruments numérique, d'un véhicule, comprenant un premier écran (11.1) et une unité de traitement (11.2), ledit procédé comportant des étapes de :
- Réception (21), par l'unité de traitement (11.2), d'une commande d'affichage d'un mode parmi au moins deux modes d'affichage de données de navigation,
- Emission (22), par l'unité de traitement (11.2), à destination d'un calculateur (12), d'un message indiquant le mode d'affichage sélectionné,
- Réception (23), par l'unité de traitement (11.2), de données vidéo, provenant du calculateur (12) et correspondant au mode d'affichage sélectionné, les données vidéo reçues par l'unité de traitement (11.2) comportant des métadonnées indiquant le mode d'affichage associé audites données vidéo, les métadonnées étant codées sur un pixel des images des données vidéo, la couleur du pixel indiquant le mode d'affichage,
- Décodage des métadonnées contenues dans le pixel,
- Commande d'un affichage (24) des données vidéo reçues dans au moins une zone d'affichage du premier écran (11.1) selon le mode d'affichage indiqué dans les métadonnées.

2. Procédé pour l'affichage de données de navigation selon la revendication 1, dans lequel le combiné (11) comprend au moins un des modes d'affichage des données de navigation suivants :
- Un premier mode d'affichage (31) comprenant une première zone d'affichage (31.1) représentant une carte et une deuxième zone d'affichage (31.2) comprenant des instructions de navigations, affichées de façon permanente ;
- Un deuxième mode d'affichage comprenant une première zone d'affichage comprenant une représentation cartographique simplifiée et une instruction de navigation, affichées de façon permanente ;
- Un troisième mode d'affichage (32) comprenant une première zone d'affichage (32.1) comportant une instruction de navigation affichée de façon ponctuelle.

3. Procédé pour l'affichage de données de navigation selon l'une des revendications précédentes, dans lequel l'unité de traitement (11.2) émet (22), à destination du calculateur (12), le message indiquant le mode d'affichage sélectionné, par l'intermédiaire d'un bus de données (14).

4. Procédé pour l'affichage de données de navigation selon l'une des revendications précédentes, dans lequel l'unité de traitement (11.2) reçoit (23), des données vidéo, provenant du calculateur (12), par l'intermédiaire d'une liaison vidéo (15).

5. Procédé pour l'affichage de données de navigation selon l'une des revendications précédentes, le véhicule comportant en outre un deuxième écran (16), ledit procédé comportant en outre une étape de détermination d'un premier flux vidéo, correspondant au mode d'affichage sélectionné pour le premier écran (11.1), d'une part, et d'un deuxième flux vidéo destiné au deuxième écran.

6. Procédé pour l'affichage de données de navigation selon l'une des revendications précédentes, ledit procédé comportant en outre une étape de détermination de données graphiques liées à un affichage de données liées au fonctionnement du véhicule, lesdites données étant affichées simultanément au flux vidéo sur le premier écran (11.1).

7. Procédé pour l'affichage de données de navigation selon la revendication précédente, dans lequel l'unité de traitement (11.2) génère une page écran comportant des données liées au fonctionnement du véhicule et une zone d'incrustation, le flux vidéo étant incrustée dans ladite zone d'incrustation.

8. Dispositif (10) pour l'affichage de données de navigation sur un combiné (11) d'instruments numérique, d'un véhicule, comprenant un premier écran (11.1) et une unité de traitement (11.2), ledit dispositif comportant :
- Des moyens de réception d'une commande d'affichage d'un mode parmi au moins deux modes d'affichage de navigation,
- Des moyens d'émission à destination d'un calculateur (12), d'un message indiquant le mode d'affichage sélectionné,
- Des moyens de réception de données vidéo, provenant du calculateur (12) et correspondant au mode d'affichage sélectionné, les données vidéo reçues par l'unité de traitement (11.2) comportant des métadonnées indiquant le mode d'affichage associé audites données vidéo, les métadonnées étant codées sur un pixel des images des données vidéo, la couleur du pixel indiquant le mode d'affichage,
- Des moyens de décodage des métadonnées contenues dans le pixel,
- Des moyens de commande d'un affichage des données vidéo reçues dans au moins une zone d'affichage du premier écran (11.1) selon le mode d'affichage indiqué dans les métadonnées.

9. Véhicule comportant un dispositif (10) pour l'affichage de données de navigation selon la revendication précédente.

## Patentansprüche

1. Verfahren zum Anzeigen von Navigationsdaten auf einem digitalen Kombiinstrument (11) eines Fahrzeugs, umfassend einen ersten Bildschirm (11.1) und eine Verarbeitungseinheit (11.2), wobei das Verfahren die folgenden Schritte umfasst:
- Empfang (21) eines Befehls zur Anzeige eines Modus von mindestens zwei Navigationsdaten-Anzeigemodi durch die Verarbeitungseinheit (11.2),
- Senden (22) einer Nachricht, die den ausgewählten Anzeigemodus angibt, durch die Verarbeitungseinheit (11.2) an einen Computer (12),
- Empfang (23) von Videodaten durch die Verarbeitungseinheit (11.2), die vom Computer (12) kommen und dem ausgewählten Anzeigemodus entsprechen, wobei die von der Verarbeitungseinheit (11.2) empfangenen Videodaten Metadaten umfassen, die den Anzeigemodus angeben den Videodaten zugeordnet, wobei die Metadaten auf einem Pixel der Bilder der Videodaten codiert sind, wobei die Farbe des Pixels den Anzeigemodus angibt,
- Dekodierung der im Pixel enthaltenen Metadaten,
- Steuerung einer Anzeige (24) der empfangenen Videodaten in mindestens einer Anzeigezone des ersten Bildschirms (11.1) entsprechend dem in den Metadaten angegebenen Anzeigemodus.

2. Verfahren zur Anzeige von Navigationsdaten nach Anspruch 1, wobei das Handgerät (11) mindestens einen der folgenden Navigationsdaten-Anzeigemodi aufweist:
- einen ersten Anzeigemodus (31), der einen ersten Anzeigebereich (31.1) umfasst, der eine Karte darstellt, und einen zweiten Anzeigebereich (31.2), der Navigationsanweisungen umfasst und permanent angezeigt wird;
- einen zweiten Anzeigemodus, der einen ersten Anzeigebereich umfasst, der eine vereinfachte kartografische Darstellung und eine Navigationsanweisung umfasst, die permanent angezeigt werden;
- einen dritten Anzeigemodus (32), der einen ersten Anzeigebereich (32.1) umfasst, der eine gelegentlich angezeigte Navigationsanweisung umfasst.

3. Verfahren zur Anzeige von Navigationsdaten nach einem der vorhergehenden Ansprüche, bei dem die Verarbeitungseinheit (11.2) über einen Datenbus (14) die Meldung über den gewählten Anzeigemodus an den Rechner (12) übermittelt (22).

4. Verfahren zur Anzeige von Navigationsdaten nach einem der vorhergehenden Ansprüche, bei dem die Verarbeitungseinheit (11.2) vom Computer (12) kommende Videodaten über eine Videoverbindung (15) empfängt (23).

5. Verfahren zur Anzeige von Navigationsdaten nach einem der vorhergehenden Ansprüche, wobei das Fahrzeug weiterhin einen zweiten Bildschirm (16) umfasst, wobei das Verfahren weiterhin einen Schritt des Bestimmens eines ersten Videostreams umfasst, der dem für den ersten Bildschirm ausgewählten Anzeigemodus entspricht (11.1) und einem zweiten Videostream, der für den zweiten Bildschirm bestimmt ist.

6. Verfahren zur Anzeige von Navigationsdaten nach einem der vorhergehenden Ansprüche, wobei das Verfahren weiterhin einen Schritt des Bestimmens grafischer Daten umfasst, die mit einer Anzeige von Daten verknüpft sind, die mit dem Betrieb des Fahrzeugs verknüpft sind, wobei die Daten gleichzeitig mit dem Flussvideo auf dem angezeigt werden erster Bildschirm (11.1).

7. Verfahren zur Anzeige von Navigationsdaten nach dem vorhergehenden Anspruch, bei dem die Verarbeitungseinheit (11.2) eine Bildschirmseite generiert, die Daten im Zusammenhang mit dem Betrieb des Fahrzeugs und einer Inlay-Zone umfasst, wobei der Videostream in die Inlay-Zone eingefügt wird.

8. Vorrichtung (10) zur Anzeige von Navigationsdaten auf einem digitalen Kombiinstrument (11) eines Fahrzeugs, umfassend einen ersten Bildschirm (11.1) und eine Verarbeitungseinheit (11.2), wobei die Vorrichtung umfasst:
- Mittel zum Empfangen eines Befehls zum Anzeigen eines Modus von mindestens zwei Navigationsanzeigemodi,
- Mittel zum Übertragen einer Nachricht an einen Computer (12), die den ausgewählten Anzeigemodus angibt,
- Mittel zum Empfangen von Videodaten, die vom Computer (12) kommen und dem ausgewählten Anzeigemodus entsprechen, wobei die von der Verarbeitungseinheit (11.2) empfangenen Videodaten Metadaten umfassen, die den mit den Videodaten verbundenen Anzeigemodus angeben, wobei die Metadaten codiert sind ein Pixel der Bilder der Videodaten, wobei die Farbe des Pixels den Anzeigemodus angibt,
- Mittel zur Dekodierung der im Pixel enthaltenen Metadaten,
- Mittel zur Steuerung einer Anzeige der empfangenen Videodaten in mindestens einer Anzeigezone des ersten Bildschirms (11.1) entsprechend dem in den Metadaten angegebenen Anzeigemodus.

9. Fahrzeug umfassend eine Vorrichtung (10) zur Anzeige von Navigationsdaten nach dem vorhergehenden Anspruch.

## Claims

1. Method for displaying navigation data on a digital instrument cluster (11) of a vehicle, comprising a first screen (11.1) and a processing unit (11.2), said method comprising steps of:
- Reception (21), by the processing unit (11.2), of a command to display one mode among at least two navigation data display modes,
- Emission (22), by the processing unit (11.2), to a computer (12), of a message indicating the selected display mode,
- Reception (23), by the processing unit (11.2), of video data, coming from the computer (12) and corresponding to the selected display mode, the video data received by the processing unit (11.2) comprising metadata indicating the display mode associated with said video data, the metadata being encoded on a pixel of the images of the video data, the color of the pixel indicating the display mode,
- Decoding of the metadata contained in the pixel,
- Control of a display (24) of the video data received in at least one display zone of the first screen (11.1) according to the display mode indicated in the metadata.

2. Method for displaying navigation data according to claim 1, wherein the handset (11) comprises at least one of the following navigation data display modes:
- A first display mode (31) comprising a first display area (31.1) representing a map and a second display area (31.2) comprising navigation instructions, permanently displayed;
- A second display mode comprising a first display area comprising a simplified cartographic representation and a navigation instruction, permanently displayed;
- A third display mode (32) comprising a first display area (32.1) comprising a navigation instruction displayed occasionally.

3. Method for displaying navigation data according to one of the preceding claims, in which the processing unit (11.2) transmits (22), to the computer (12), the message indicating the display mode selected, via a data bus (14).

4. Method for displaying navigation data according to one of the preceding claims, in which the processing unit (11.2) receives (23), video data, coming from the computer (12), via 'a video link (15).

5. Method for displaying navigation data according to one of the preceding claims, the vehicle further comprising a second screen (16), said method further comprising a step of determining a first video stream, corresponding to the mode display selected for the first screen (11.1), on the one hand, and a second video stream intended for the second screen.

6. Method for displaying navigation data according to one of the preceding claims, said method further comprising a step of determining graphic data linked to a display of data linked to the operation of the vehicle, said data being displayed simultaneously with the flow video on the first screen (11.1).

7. Method for displaying navigation data according to the preceding claim, in which the processing unit (11.2) generates a screen page comprising data related to the operation of the vehicle and an inlay zone, the video stream being inlaid in said inlay zone.

8. Device (10) for displaying navigation data on a digital instrument cluster (11) of a vehicle, comprising a first screen (11.1) and a processing unit (11.2), said device comprising:
- Means for receiving a command to display one mode among at least two navigation display modes,
- Means for transmitting a message to a computer (12) indicating the selected display mode,
- Means for receiving video data, coming from the computer (12) and corresponding to the selected display mode, the video data received by the processing unit (11.2) comprising metadata indicating the display mode associated with said video data , the metadata being encoded on a pixel of the images of the video data, the color of the pixel indicating the display mode,
- Means for decoding the metadata contained in the pixel,
- Means for controlling a display of the video data received in at least one display zone of the first screen (11.1) according to the display mode indicated in the metadata.

9. Vehicle comprising a device (10) for displaying navigation data according to the preceding claim.
